# EUROPEAN PATENT APPLICATION

(11) **EP 4 553 746 A1**
(43) Date of publication of application: **14.05.2025**
(21) Application number: 23212665.6
(22) Date of filing: 28.11.2023
(51) Int. Cl.: G06Q 40/04, H04L 9/00

(54) **TECHNOLOGY FOR EXECUTING ACCELERATED INSTRUCTIONS IN BLOCKCHAIN SYSTEM**

(30) Priority: 08.11.2023 KR 20230153515
(71) Applicant: Anam145, Seoul 02841 (KR)
(72) Inventor: LEE, Junghee, Seoul 02721 (KR); SIM, Junsik, Seoul 08092 (KR)
(74) Representative: BCKIP Part mbB

(57) **Abstract**

Disclosed is a method of executing an accelerated instruction in a blockchain system. The method includes executing, by a virtual machine on a blockchain network, a first smart contract, calling, by the first smart contract, a second smart contract related to the accelerated instruction, requesting, by the second smart contract, execution of a first algorithm related to the accelerated instruction from one or more sub-nodes, acquiring, by the second smart contract, an execution result of the first algorithm from the one or more sub-nodes, and returning, by the second smart contract, the execution result of the first algorithm to the first smart contract.

## Description

### CROSS-REFERENCE TO RELATED APPLICATION

This application claims priority to and the benefit of Korean Patent Application No. 2023-0153515, filed on November 08, 2003.

### BACKGROUND

### 1. Field of the Invention

The present invention relates to technology for executing an accelerated instruction in a blockchain system.

### 2. Discussion of Related Art

A smart contract is a feature that allows programs to be executed on a blockchain. When executing a smart contract on a blockchain, a gas fee should be paid, which varies depending on an instruction being executed. The more instructions executed, the higher the gas fee that needs to be paid.

It is significantly important to reduce the gas fee when providing blockchain services through a smart contract. Since the gas fee ultimately has to be paid by the end user, when the gas fee is too high, it lowers competitiveness, making it difficult to attract user choices.

Recently, there has been active development of services utilizing zero-knowledge proofs. However, the zero-knowledge proof services developed so far suffer from high gas fees due to the complexity of the corresponding algorithm. In addition to the zero-knowledge proofs, homomorphic encryption and deep learning are also algorithms that are gaining attention. These algorithms incur high gas fees when executed on a blockchain, presenting a significant obstacle to the expansion of services. Furthermore, there is a possibility of the emergence of new algorithms with even higher gas fees in the future.

### SUMMARY OF THE INVENTION

It is an object of the present invention to present methods for solving the above-described problems.

According to an aspect of the present invention, there is provided a method of executing an accelerated instruction in a blockchain system. The method includes executing, by a virtual machine on a blockchain network, a first smart contract; calling, by the first smart contract, a second smart contract related to the accelerated instruction; requesting, by the second smart contract, execution of a first algorithm related to the accelerated instruction from one or more sub-nodes; acquiring, by the second smart contract, an execution result of the first algorithm from the one or more sub-nodes; and returning, by the second smart contract, the execution result of the first algorithm to the first smart contract.

The first smart contract may include an instruction to call the second smart contract.

A transaction between the second smart contract and the one or more sub-nodes may be an off-chain transaction of the blockchain network.

The one or more sub-nodes may include one or more virtual machines for executing the first algorithm, and the one or more virtual machines may provide the execution result of the first algorithm to the second smart contract.

The second smart contract may return the execution result of the first algorithm provided by the largest number of sub-nodes to the first smart contract.

The one or more sub-nodes may deposit assets, and the deposited assets may be slashed for the sub-node that has an error in the execution result of the first algorithm among the one or more sub-nodes.

The one or more sub-nodes may request the execution of the first algorithm from a plurality of side chain nodes constituting one or more side chains, the plurality of side chain nodes may include a virtual machine for executing the first algorithm, and the one or more sub-nodes may acquire the execution result of the first algorithm from the plurality of side chain nodes.

A transaction related to the execution of the first algorithm may be recorded in the one or more side chains.

The second smart contract may return the execution result of the first algorithm provided by the largest number of side chain nodes to the first smart contract.

The one or more side chain nodes may deposit assets, and the deposited assets may be slashed for the side chain node that has an error in the execution result of the first algorithm among the one or more side chain nodes.

According to another aspect of the present invention, there is provided a blockchain system for executing an accelerated instruction. The blockchain system includes a blockchain network configured to store one or more transactions in one or more blocks; one or more virtual machines configured to execute an instruction related to the one or more transactions; and one or more sub-nodes configured to be connected to the blockchain network, wherein the virtual machine on the blockchain network may execute a first smart contract, the first smart contract may call a second smart contract related to the accelerated instruction, the second smart contract may request execution of a first algorithm related to the accelerated instruction from the one or more sub-nodes, the second smart contract may acquire an execution result of the first algorithm from the one or more sub-nodes, and the second smart contract may return the execution result of the first algorithm to the first smart contract.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a diagram illustrating an example of a blockchain system according to the present disclosure;
FIG. 2 is a diagram illustrating an example of a blockchain system according to the present disclosure;
FIG. 3 is an example of a flowchart illustrating a method of executing an accelerated instruction according to the present invention;
FIG. 4 is a diagram illustrating an example of asset slashing in a blockchain system according to the present disclosure;
FIG. 5 is an example of a diagram illustrating a method of executing an accelerated instruction according to the present invention;
FIG. 6 is a diagram illustrating an example of asset slashing of a blockchain system according to the present invention; and
FIG. 7 is a block diagram illustrating a computer device according to the present invention.

### DETAILED DESCRIPTION OF EXEMPLARY EMBODIMENTS

Specific structural or functional descriptions of the embodiments of the present invention disclosed in the present specification or application are only exemplified for the purpose of describing the embodiments according to the present invention, and the embodiments according to the present invention are implemented in various forms and should not be construed as being limited to the embodiments described in the present specification or application.

Since the embodiments according to the present invention may have various changes and forms, specific embodiments will be illustrated in the drawings and described in detail in the present specification or application. However, this is not intended to limit the embodiments according to the concept of the present invention with respect to a specific disclosed form, and should be understood to include all changes, equivalents or substitutes included in the spirit and scope of the present invention.

Terms such as "first," and/or "second," etc., may be used to describe various components, but the components are not to be construed as being limited to the terms. The terms are used only to distinguish one component from another component. For example, a "first" component may be called a "second" component and a "second" component may also be similarly called a "first" component without departing from the scope of the present invention.

It is to be understood that when a first component is referred to as being "connected to" or "coupled to" a second element, it may be connected or coupled directly to the second element or be connected to or coupled to the second element with a third element intervening therebetween. On the other hand, it is to be understood that when a first element is referred to as being "connected directly to" or "coupled directly to" a second element, it may be connected or coupled to the second element with no other element intervening therebetween. Other expressions describing a relationship between components, such as "between," "directly between," "neighboring," "directly neighboring," and the like, should be similarly interpreted.

Terms used in the present specification are used only in order to describe specific exemplary embodiments rather than limiting the present invention. Singular forms are intended to include plural forms unless the context clearly indicates otherwise. It will be further understood that the terms "comprise" or "have" used in this specification, specify the presence of stated features, numerals, steps, operations, components, parts, or a combination thereof, but do not preclude the presence or addition of one or more other features, numerals, steps, operations, components, parts, or a combination thereof.

Unless indicated otherwise, it is to be understood that all the terms used in the specification including technical or scientific terms have the same meaning as those that are understood by those skilled in the art. It must be understood that the terms defined by the dictionary are identical with the meanings within the context of the related art, and they should not be ideally or excessively formally defined unless the context in this specification clearly indicates otherwise.

In description of the embodiments of the present disclosure, description of technical features that are well known in the technical field to which the present disclosure belongs and are not directly related to the present disclosure will be omitted. This is to convey the gist of the present disclosure more clearly without obscuring the gist of the present disclosure by omitting unnecessary descriptions.

### 1. Accelerated instruction

Smart contract developers can optimize algorithms themselves to reduce gas fees. The developers can reduce gas fees by reducing the number of instructions that are required to be performed by the algorithm or by using instructions with low gas fees. One method of implementation using instructions with low gas fees is to utilize accelerated instructions for specific computations.

A representative example is the KECCAK256 instruction in the Ethereum Virtual Machine (EVM). The EVM is a virtual machine that executes smart contracts on Ethereum. This virtual machine executes assembly instructions sequentially, similar to a processor. The KECCAK256 instruction is an instruction to perform a hash algorithm commonly used in smart contracts with a single instruction. Without this instruction, a corresponding algorithm needs to be implemented using basic addition and multiplication instructions, resulting in higher gas fees compared to when executed through the KECCAK256 instruction. Therefore, when an accelerated instruction to perform an algorithm with high gas fees is added to the EVM, the gas fees associated with execution of the corresponding algorithm can be significantly reduced.

To add a new instruction to the EVM on a mainnet, all nodes in a blockchain network are required to be updated. For algorithms used in most smart contracts, such as hash functions, updating all nodes is considered valuable. However, updating all nodes for algorithms that are only used in specific applications, such as zero-knowledge proof, can be a waste of resources. In addition, whenever a new algorithm is released in the future, it is difficult to update all nodes to add acceleration instructions for the new algorithm.

### 2. Proposed method

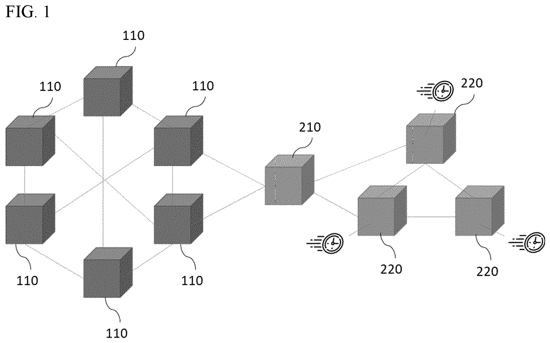

FIG. 1 is a diagram illustrating an example of a blockchain system according to the present invention.

In this disclosure, a side chain constituted of nodes to which an acceleration instruction is added, as shown in FIG. 1, is proposed.

Referring to FIG. 1, a blockchain system 10 for executing an acceleration instruction may include a plurality of nodes 110 constituting a blockchain network, one or more sub-nodes 210 (bridges) connected to the blockchain network, and a plurality of side chain nodes 220 constituting a side chain. The one or more sub-nodes 210 may interconnect a mainnet of the blockchain network and the side chain.

In the present disclosure, the acceleration instruction is an instruction to perform a specific algorithm including a plurality of instructions. The accelerated instruction may be executed by a virtual machine. When an accelerated instruction is executed, lower gas fees may be paid compared to when a specific algorithm is executed by a plurality of instructions.

A side chain network separate from the mainnet is configured, and the side chain network is connected to the mainnet through a bridge 210 (Sub-node). In all nodes 220 of the side chain, a virtual machine to which an instruction with which a specific algorithm can be executed with a single instruction is added is installed.

Smart contract A on the mainnet may perform algorithm F, which includes specific instructions, by the following process without using the mainnet directly.

(1-1) Smart contract A calls smart contract B on the mainnet, which performs specific algorithm F.

(1-2) The called smart contract B requests execution of algorithm F from the bridge 210.

(1-3) When the bridge 210 generates a transaction in the side chain, the side chain node 220 executes algorithm F using an acceleration instruction.

(1-4) Smart contract B on the mainnet reads the execution result from the bridge 210 and returns the execution result to smart contract A.

When the same algorithm has already been executed with the same input, the execution result of the algorithm may already be recorded in the side chain, and therefore the bridge 210 may immediately return the result in operation (1-3).

Using the above process, there is no need to modify the mainnet. A new accelerated instruction may be added by updating only fewer side chain nodes 220 or configuring a new side chain.

In this configuration, gas fees are incurred between the bridge 210 and the side chain, and the mainnet must pay additional gas fees for the execution of smart contract B. This configuration is effective when a reduction in the gas fees through the accelerated instruction is greater than the added cost. When designing a side chain dedicated to the accelerated instruction, it is desirable to set the fees on the side chain to be lower than when the algorithm related to the accelerated instruction is directly executed on the mainnet.

When the gas fees paid for the node 220 of the side chain dedicated to the accelerated instruction are too low, there will be no nodes participating in the side chain. Therefore, it is desirable to configure the side chain dedicated to the accelerated instruction so that rewards are paid to be equivalent to or higher than the mainnet. When the gas fees paid when executing algorithm F on the mainnet are sufficiently large, this condition can be satisfied.

### 3. Various implementation methods

Several methods for implementing the proposed method will now be described. The reason there are various implementation methods is because there may be multiple ways to solve trust issues. Because the side chain is constituted of fewer nodes compared to the mainnet, trust issues regarding the computation result may arise. The required level of trust may vary depending on the algorithm, application, and the gas fees that can be reduced through acceleration.

### 3-1. Incentive

Since the side chain is also a blockchain, multiple, albeit fewer, nodes participate and perform a consensus algorithm. Recently, the Proof of Stake (PoS) algorithm has been widely used. In order to participate as a PoS node, it is necessary to deposit a certain amount of assets. When there is a problem with the node, some or all of the deposited assets will be lost (slashing). Through this, participating nodes can be incentivized to perform computations honestly.

A similar approach can be adopted in the side chain dedicated to the accelerated instruction. Participating nodes are allowed to deposit assets, and when a problem is found in the computation result of the participating node, the deposit assets of the participating node can be slashed. Since both the inputs and results of accelerated computations are permanently recorded on both the mainnet and the side chain, it becomes possible to verify who has performed abnormal computations in the future.

### 3-2. Layer 2

Layer 2 technology is a technology that ensures reliability by adding a mechanism to identify the computation results of the side chain to Layer 1. Because additional verification is performed on the mainnet, which is Layer 1, reliability can be increased to the level of the mainnet. The most representative Layer 2 technologies are optimistic rollup and zk rollup.

The optimistic rollup is a method of collecting transactions of Layer 2, uploading the results to the mainnet, setting a dispute period, and performing post-verification during the dispute period. When a problem is identified during the dispute period, a node that raised the problem will receive a reward, and a node that performed wrong computation will be penalized. This method requires a small amount of computation, but it takes a long time for the computation result to be confirmed because a user has to wait during the dispute period.

The zk Rollup is a method of collecting transactions, generating zero-knowledge proofs, and uploading the generated zero-knowledge proofs to the mainnet. Because validity can be verified through the zero-knowledge proofs, the confirmation time is short, but the disadvantage is that many computations are required to generate the zero-knowledge proofs.

Layer 2 technology can also be applied to the side chain dedicated to the accelerated instruction. Because this technology requires additional computation, it requires higher rewards for participating nodes.

### 3-3. Accelerated node

Both the side chain and Layer 2 have the common disadvantage that the bridge is centralized. Because the bridge is centralized, security is relatively weak, and thus many cases of damage due to hacking have been reported.

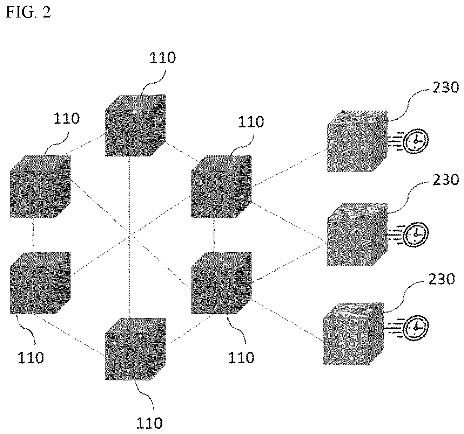

FIG. 2 is a diagram illustrating an example of a blockchain system according to the present invention.

To solve the bridge centralization problem and further reduce fees, the blockchain system shown in FIG. 2 is additionally proposed.

In this method, there are no side chains. In other words, transactions in the side chain are not stored separately and the consensus algorithm between the side chain nodes is not performed. Instead, a plurality of bridges 230 (sub-nodes) are connected to the mainnet. Here, since the bridges 230 do not play a role in connecting the side chain, the bridges 230 will henceforth be referred to as accelerated nodes (sub-nodes). In an accelerated node, a virtual machine that can execute the accelerated instruction is installed.

Smart contract A on the mainnet may execute specific algorithm F through the following process.

(2-1) Smart contract A calls smart contract B on the mainnet, which performs algorithm F.

(2-2) Smart contract B requests execution of algorithm F from an accelerated node 230.

(2-3) When the results come from each accelerated node 230, smart contract B confirms the results through voting and returns the confirmed results to smart contract A.

(2-4) When there is an accelerated node 230 that returns a different result from the final result, the deposited assets of the accelerated node 230 that returned the different result are slashed.

In operations (2-3) and (2-4), the communication between smart contract B and the accelerated node 230 is off-chain and is not recorded on the chain. Therefore, no gas fees are incurred. Since the communication is not recorded in the chain and the record cannot be confirmed later, slashing is performed immediately upon voting in operation (2-4) with respect to the problematic accelerated node 230.

According to this process, the centralization problem of the bridge can be solved. In addition, there is an advantage that the gas fees of the side chain are not incurred and the overall gas fees can be further lowered by configuring the accelerated node with a simple function. In addition, a level of reliability similar to the incentive and Layer 2 technologies described above is provided. The reasons for this compared to an Ethereum node are explained below.

To participate as an Ethereum node, it is necessary to deposit a certain amount of assets, and when there is a problem, slashing is performed. Even in this configuration, it is necessary to deposit assets to participate as an accelerated node, and when a problem occurs, the assets of the corresponding accelerated node will be slashed. Therefore, the incentive to perform computations honestly is assigned to the accelerated node.

In Ethereum, a randomly selected node becomes a block proposer, proposing block candidates and generating blocks through the votes of other nodes. The block proposer collects the voting results. In this method, smart contract B on the mainnet performs a similar role to the block proposer. A participating accelerated node only performs verification in response to a request from smart contract B. Since smart contract B is executed on the mainnet, mainnet-level reliability can be guaranteed.

Ethereum's block proposer collects multiple transactions to propose a block and selects a transaction to maximize profits. Smart contract B of this method processes only one transaction (e.g., algorithm F) at a time.

One Ethereum node is constituted of an execution client including the EVM, and a consensus client that performs the consensus algorithm. The accelerated node of the present disclosure may be constituted of an execution client including a virtual machine capable of executing the accelerated instruction and a simplified consensus client. The execution client of the present disclosure may include only the virtual machines capable of executing the accelerated instruction. In addition, the consensus client need only vote and does not need to store blocks. Therefore, the gas fees can be lowered because the computation is performed by a client with a simpler structure than the Ethereum node.

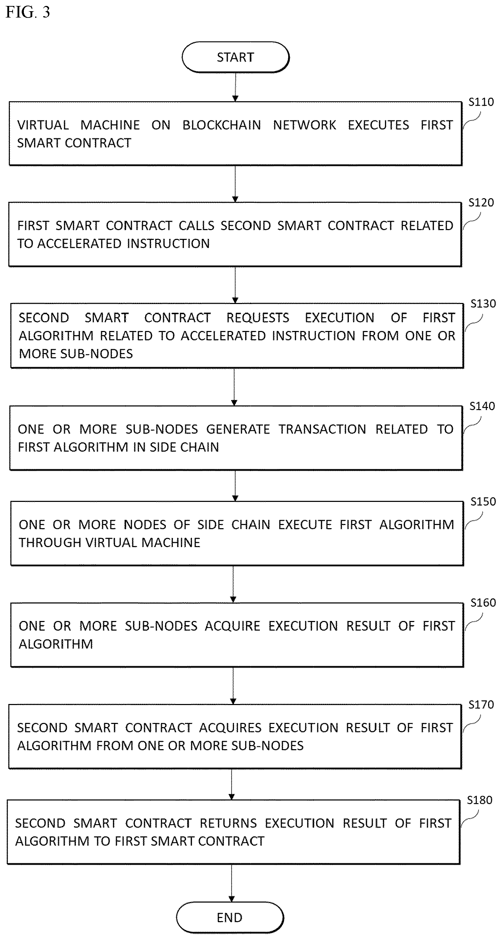

FIG. 3 is an example of a flowchart illustrating a method of executing an accelerated instruction according to the present invention.

The method shown in FIG. 3 is an example of a method of executing an accelerated instruction performed by the blockchain network system shown in FIG. 1.

Referring to FIG. 3, in operation S110, a virtual machine on a blockchain network may execute a first smart contract. The virtual machine may drive one or more nodes 110 that constitute the blockchain network. The first smart contract may include an instruction to call the second smart contract.

In operation S120, the first smart contract may call the second smart contract related to the accelerated instruction. The second smart contract may include an instruction to execute a first algorithm related to the accelerated instruction.

In operation S130, the second smart contract may request execution of the first algorithm related to the accelerated instruction from one or more sub-nodes 210. The one or more sub-nodes 210 may be connected to the blockchain network. A transaction between the blockchain network and the one or more sub-nodes 210 is an off-chain transaction.

In operation S 140, the one or more sub-nodes 210 may generate a transaction related to the first algorithm in the side chain.

In operation S150, the one or more nodes 220 of the side chain may execute the first algorithm through the virtual machine.

In operation S160, the one or more sub-nodes 210 may acquire the execution result of the first algorithm from the side chain.

In operation S 170, the second smart contract may acquire the execution result of the first algorithm from the one or more sub-nodes 210.

In operation S180, the second smart contract may return the execution result of the first algorithm to the first smart contract.

According to the method shown in FIG. 3, the accelerated instruction can be executed with low gas fees by using the side chain dedicated to the accelerated instruction.

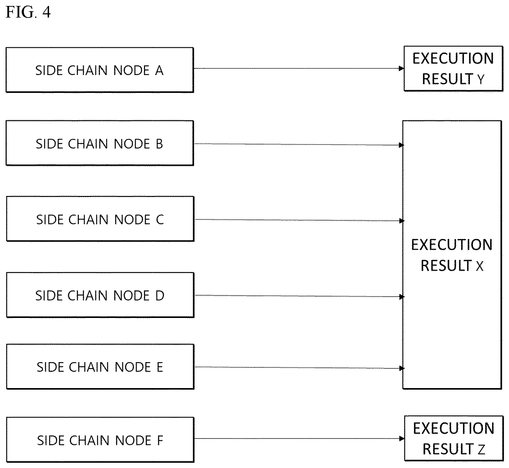

FIG. 4 is a diagram illustrating an example of asset slashing in a blockchain system according to the present disclosure.

In FIG. 4, asset slashing of the side chain node in the blockchain system shown in FIG. 1 is described.

When the one or more sub-nodes 210 generate a transaction related to the first algorithm in the side chain, a plurality of side chain nodes 220 (A, B, C, D, E, and F) execute the first algorithm through the virtual machine.

Side chain node A may provide Y as the execution result of the first algorithm, side chain nodes B to E may provide X as the execution result of the first algorithm, and side chain node F may provide Z as the execution result of the first algorithm. In this case, the execution result X provided from the most side chain nodes may be determined as the execution result of the first algorithm.

Assets may be slashed as a penalty for side chain node A and side chain node F that provide execution results Y and Z that are different from execution result X. According to this configuration, the reliability of transactions of multiple side chain nodes can be improved.

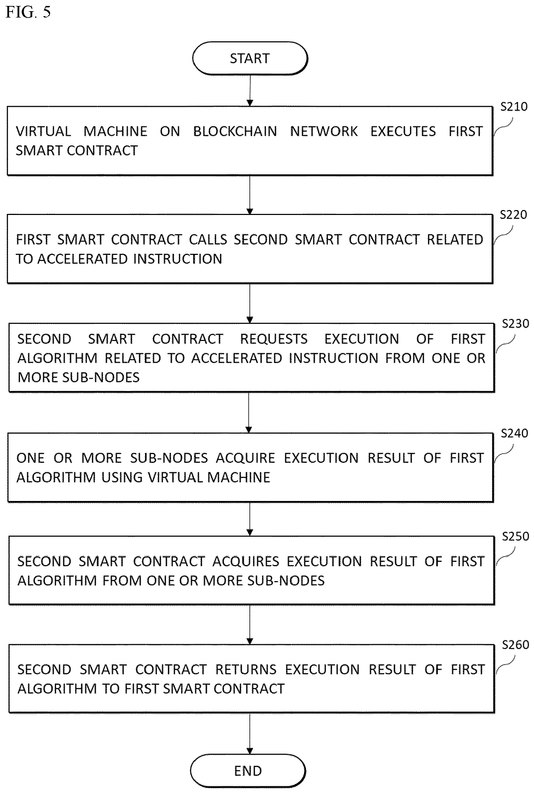

FIG. 5 is an example of a flowchart illustrating a method of executing an accelerated instruction according to the present invention.

The method shown in FIG. 5 is an example of a method of executing an accelerated instruction performed by the blockchain network system shown in FIG. 2.

Referring to FIG. 5, in operation S210, a virtual machine on the blockchain network may execute a first smart contract. The virtual machine may drive the one or more nodes 110 constituting a blockchain network. The first smart contract may include an instruction to call the second smart contract.

In operation S220, the first smart contract may call the second smart contract related to the accelerated instruction. The second smart contract may include an instruction to execute the first algorithm related to the accelerated instruction.

In operation S230, the second smart contract may request execution of the first algorithm related to the accelerated command from the one or more sub-nodes 230. The one or more sub-nodes 230 may be connected to the blockchain network. A transaction between the blockchain network and the one or more sub-nodes 230 is an off-chain transaction.

In operation S240, the one or more sub-nodes 230 may acquire the execution result of the first algorithm using the virtual machine.

In operation S250, the second smart contract may acquire the execution result of the first algorithm from the one or more sub-nodes 230.

In operation S260, the second smart contract may return the execution result of the first algorithm to the first smart contract.

According to the method shown in FIG. 5, the accelerated instruction can be executed with low gas fees by using the sub-node 230 dedicated to the accelerated instruction.

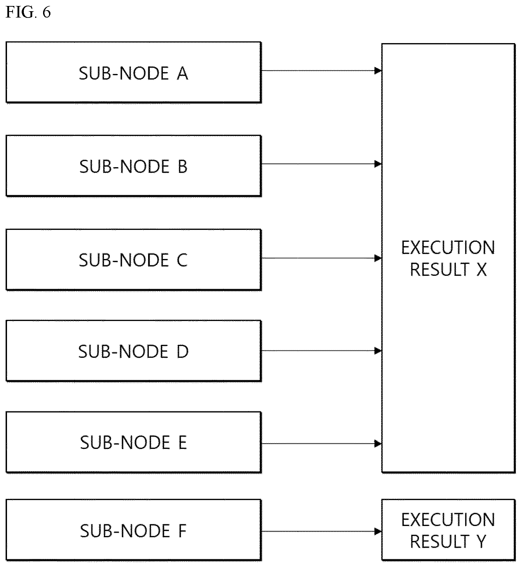

FIG. 6 is a diagram illustrating an example of asset slashing of a blockchain system according to the present invention.

In FIG. 6, asset slashing of the one or more sub-nodes 230 in the blockchain system shown in FIG. 2 is described.

When the second smart contract requests execution of a first algorithm related to the accelerated instruction from the one or more sub-nodes 230, the one or more sub-nodes 230 (A, B, C, D, E, and F) may execute the first algorithm through the virtual machine.

Sub-nodes A to E may provide X as the execution result of the first algorithm, and sub-node F may provide Y as the execution result of the first algorithm. In this case, the execution result X provided from the most sub-nodes may be determined as the execution result of the first algorithm.

Assets may be slashed as a penalty for sub-node F that provides execution result Y that is different from execution result X. According to this configuration, the reliability of the computation results of the one or more sub-nodes 230 can be improved.

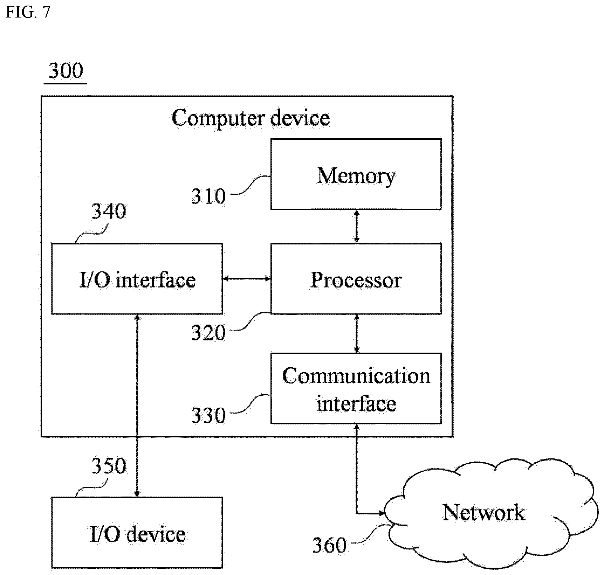

FIG. 7 is a block diagram illustrating a computer device according to the present invention.

The one or more blockchain nodes 110, the one or more sub-nodes 210, the side chain nodes 220, and the one or more sub-nodes 230 shown in FIGS. 1 and 2 may be implemented by a computer device 300.

The computer device 300 may include a memory 310, a processor 320, a communication interface 330, and an input/output (I/O) interface 340. The memory 310 is a computer-readable recording medium and may include a permanent mass storage device such as a random access memory (RAM), a read only memory (ROM), or a disk drive. Here, the permanent mass storage device such as the ROM or disk drive may be included in the computer device 300 as a separate permanent storage device that is distinct from the memory 310. In addition, an operating system and at least one program code may be stored in the memory 310. These software components may be loaded into the memory 310 from a computer-readable recording medium separate from the memory 310. Such a separate computer-readable recording medium may include a computer-readable recording medium such as a floppy drive, a disk, a tape, a DVD/CD-ROM drive, or a memory card. In another embodiment, the software components may be loaded into the memory 310 through the communication interface 330 rather than the computer-readable recording medium. For example, the software components may be loaded into the memory 310 of the computer device 300 based on a computer program installed by files received through the network 360.

The processor 320 may be configured to process instructions of the computer program by performing basic arithmetic, logic, and I/O operations. The instructions may be provided to the processor 320 by the memory 310 or the communication interface 330. For example, the processor 320 may be configured to execute instructions received according to program codes stored in a recording device such as the memory 310.

The communication interface 330 may provide a function for the computer device 300 to communicate with other devices through the network 360. For example, requests, commands, data, files, etc., generated by the processor 320 of the computer device 300 according to the program code stored in the recording device such as the memory 310 may be transmitted to other devices through the network 360. Conversely, signals, commands, data, files, etc., from other devices may be received by the computer device 300 through the communication interface 330 of the computer device 300 via the network 360. The signals, commands, data, etc., received through the communication interface 330 may be transmitted to the processor 320 or memory 310, and files, etc., may be stored in a storage medium (the permanent storage device described above) that the computer device 300 may further include.

The I/O interface 340 may be a means for interfacing with the I/O device 350. For example, the input device may include devices such as a microphone, a keyboard, a mouse, etc., and the output device may include devices such as a display, a speaker, etc. As another example, the I/O interface 340 may be a means for interfacing with a device that integrates input and output functions, such as a touch screen. The I/O device 350 may be configured as a single device with the computer device 300.

In addition, in other embodiments, the computer device 300 may include fewer or more components than those of FIG. 7. However, there is no need to clearly show most components according to the prior art. For example, the computer device 300 may be implemented to include at least a part of the I/O device 350 described above, or may further include other components such as a transceiver, a database, etc.

As described above, according to an embodiment of the present invention, gas fees can be reduced when a smart contract is executed in a blockchain system.

Embodiments of the present disclosure have been particularly shown and described with reference to examples thereof to easily describe the technical content of the present disclosure and aid understanding of the present disclosure, and are not intended to limit the scope of the present disclosure. That is, it is obvious to one of ordinary skill in the art that various changes in form and details may be made therein without departing from the spirit and scope as defined in the following claims.

The claims set forth herein can be combined in a variety of ways. For example, the technical features of the method claims of this specification may be combined to be implemented as an apparatus, and the technical features of the apparatus claims of this specification may be combined to be implemented as a method. In addition, the technical features of the method claims of the present specification and the technical features of the apparatus claims may be combined to be implemented as an apparatus, and the technical features of the method claims of the present specification and the technical features of the apparatus claims may be combined to be implemented as a method.

## Claims

1. A method of executing an accelerated instruction in a blockchain system, the method comprising:
executing, by a virtual machine on a blockchain network, a first smart contract;
calling, by the first smart contract, a second smart contract related to the accelerated instruction;
requesting, by the second smart contract, execution of a first algorithm related to the accelerated instruction from one or more sub-nodes;
acquiring, by the second smart contract, an execution result of the first algorithm from the one or more sub-nodes; and
returning, by the second smart contract, the execution result of the first algorithm to the first smart contract.

2. The method of claim 1, wherein the first smart contract includes an instruction to call the second smart contract.

3. The method of claim 1 or 2, wherein a transaction between the second smart contract and the one or more sub-nodes is an off-chain transaction of the blockchain network.

4. The method of any one of claims 1 to 3, wherein the one or more sub-nodes include one or more virtual machines for executing the first algorithm, and the one or more virtual machines provide the execution result of the first algorithm to the second smart contract.

5. The method of any one of claims 1 to 4, wherein the second smart contract returns the execution result of the first algorithm provided by the largest number of sub-nodes to the first smart contract.

6. The method of any one of claims 1 to 5, wherein the one or more sub-nodes deposit assets, and the deposited assets are slashed for the sub-node that has an error in the execution result of the first algorithm among the one or more sub-nodes.

7. The method of any one of claims 1 to 6, wherein one or more sub-nodes request the execution of the first algorithm from a plurality of side chain nodes constituting one or more side chains,
the plurality of side chain nodes include a virtual machine for executing the first algorithm, and
the one or more sub-nodes acquire the execution result of the first algorithm from the plurality of side chain nodes.

8. The method of claim 7, wherein a transaction related to the execution of the first algorithm is recorded in the one or more side chains.

9. The method of claim 7 or 8, wherein the second smart contract returns the execution result of the first algorithm provided by the largest number of side chain nodes to the first smart contract.

10. The method of any one of claims 7 to 9, wherein the one or more side chain nodes deposit assets, and the deposited assets are slashed for the side chain node that has an error in the execution result of the first algorithm among the one or more side chain nodes.

11. A blockchain system for executing an accelerated instruction, the blockchain system comprising:
a blockchain network configured to store one or more transactions in one or more blocks;
one or more virtual machines configured to execute an instruction related to the one or more transactions; and
one or more sub-nodes configured to be connected to the blockchain network,
wherein the virtual machine on the blockchain network executes a first smart contract,
the first smart contract calls a second smart contract related to the accelerated instruction,
the second smart contract requests execution of a first algorithm related to the accelerated instruction from the one or more sub-nodes,
the second smart contract acquires an execution result of the first algorithm from the one or more sub-nodes, and
the second smart contract returns the execution result of the first algorithm to the first smart contract.
